# FASCICULE DE BREVET EUROPEEN

(11) **EP 0 810 838 B1**
(45) Date de publication et mention de la délivrance du brevet: **16.06.1999**
(21) Numéro de dépôt: 96904888.3
(22) Date de dépôt: 21.02.1996
(51) Int. Cl.: A47J 45/07

(54) **USTENSILE DE CUISSON A ANSE ANNULAIRE**
KOCHGERÄT MIT RINGFÖRMIGEM GRIFF
COOKING UTENSIL HAVING A RING-SHAPED HANDLE

(30) Priorité: 24.02.1995 FR 9502181
(43) Date de publication de la demande: 10.12.1997
(73) Titulaire: SITRAM Société Industrielle de Transformation des Métaux, 36170 Saint-Benoit-du-Sault (FR)
(72) Inventeur: SEGUELAS, Etienne, F-89140 Lixy (FR)
(74) Mandataire: Jaunez, Xavier
(86) Numéro de dépôt international: FR9600276
(87) Numéro de publication internationale: WO9625871

(56) Documents cités:
- DE-C- 290
- FR-A- 503 587
- FR-A- 2 053 654
- GB-A- 116 788
- GB-A- 139 789

## Description

La présente invention concerne un ustensile de cuisson à anse annulaire.

On connaît depuis longtemps des ustensiles de cuisson, tels que marmites ou casseroles, du type comportant généralement un fût de base de révolution autour d'un axe et une poignée de préhension ou deux anses de préhension diamétralement opposées fixées à proximité du bord supérieur du fût. La ou les poignées de préhension peuvent être fixées de manière amovible au fût de l'ustensile par un cerclage annulaire qui ceinture le fût (voir par exemple les documents DE-C-290, FR-A-2.053.654, FR-A-503.587, GB-A-116.788 et GB-A-139.789).

Avec ce genre d'ustensile, les anses ne sont pas toujours bien orientées par rapport à l'utilisateur qui souhaite s'en emparer. C'est pourquoi il est apparu avantageux de réaliser des ustensiles de cuisson équipés d'une anse annulaire entourant l'extrémité supérieure du fût. L'ustensile peut ainsi être agrippé commodément quelle que soit son orientation par rapport à l'utilisateur. Les tentatives déjà réalisées ont consisté à réaliser une anse annulaire en fil inox fixée de façon non démontable sur la périphérie du fût, au moyen de quatre pattes soudées.

Une anse de ce type augmente toutefois considérablement l'encombrement de l'ustensile et rend ainsi son stockage plus difficile. De plus, les zones situées entre l'anse annulaire et le fût sont difficilement accessibles et le lavage de l'ustensile est donc rendu délicat. Enfin, pour des impératifs d'isolation thermique et de résistance mécanique, on souhaiterait pouvoir utiliser de la bakélite comme matériau constitutif de l'anse annulaire. Or, on sait que ce matériau résiste mal aux détergents utilisés dans les machines de lavage automatiques, ce qui rend encore plus problématique le lavage de l'ustensile.

En vue de remédier à ces inconvénients, la présente invention a pour objet un ustensile de cuisson, comportant un fût de base de révolution autour d'un axe et une anse annulaire fixée de façon amovible sur la périphérie dudit fût.

L'anse annulaire peut ainsi être démontée pour permettre un lavage séparé du fût et de l'anse et faciliter le rangement du fût. En particulier, il sera possible d'utiliser une seule et même anse pour un ensemble de fûts de différentes hauteurs.

Selon un mode d'exécution avantageux, le fût est pourvu d'au moins trois pions de fixation s'étendant sensiblement radialement, en saillie de la surface extérieure du fût, pour coopérer avec des logements correspondants ménagés intérieurement dans l'anse annulaire, au moins deux de ces logements étant associés chacun à un organe de verrouillage monté sur l'anse annulaire pour être mobile entre une position de verrouillage dans laquelle il s'oppose au retrait du pion de fixation correspondant et une position de déverrouillage dans laquelle il autorise ce retrait. Le montage et le démontage de l'anse annulaire est ainsi particulièrement simple et rapide. De plus, les pions de fixation équipant le fût n'en augmentent pas sensiblement l'encombrement.

Plus précisément, les logements de l'anse annulaire sont des encoches ménagées dans des bossages de l'anse annulaire perpendiculairement au plan de cette anse, lesdites encoches ayant une extrémité supérieure débouchante et possédant à leur extrémité inférieure un fond formant butée pour les pions de fixation du fût.

Avantageusement, chacun des organes de verrouillage associés à au moins deux des encoches de l'anse annulaire comporte un levier d'encliquetage monté sur l'anse annulaire pour pivoter transversalement à l'encoche associée entre sa position de verrouillage et sa position de déverrouillage.

Selon une autre caractéristique avantageuse de l'invention, le fond d'au moins l'une des encoches de l'anse annulaire est équipé d'un tampon élastique assurant le rattrapage du jeu de montage de l'anse annulaire lorsque les pions de fixation sont disposés dans les encoches et que les organes de verrouillage sont en position de verrouillage. Plus précisément le tampon élastique précité est constitué par une lame galbée dont les extrémités sont en appui sur le fond de l'encoche.

D'autres caractéristiques et avantages de l'invention apparaîtront à la lecture de la description qui suit d'un mode de réalisation particulier et non limitatif, en liaison avec les figures en annexe, parmi lesquelles :

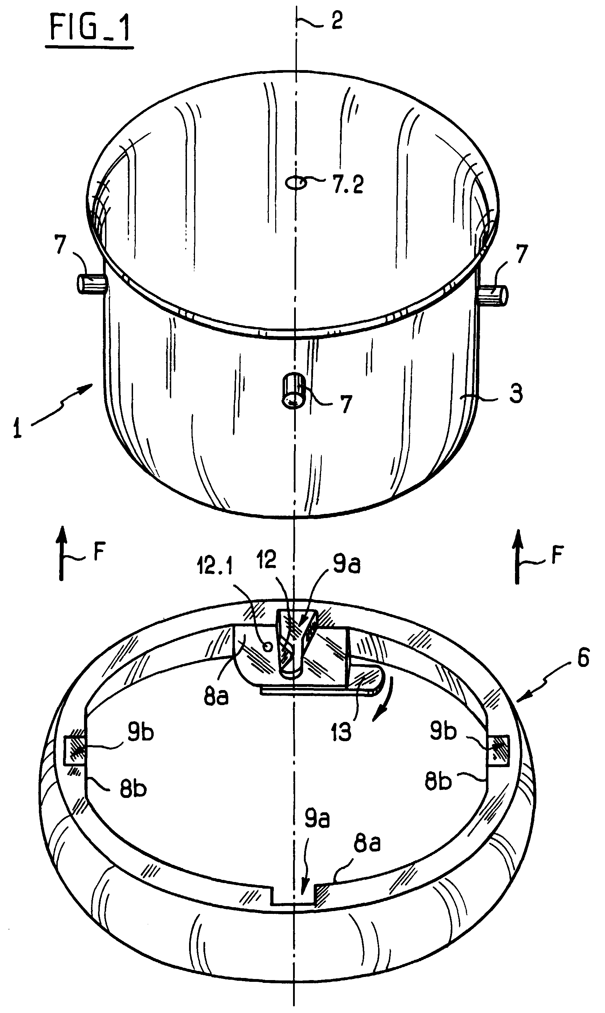

- la figure 1 est une vue en perspective éclatée d'un ustensile de cuisson conforme à l'invention avec une anse annulaire qui est détachée du fût ;

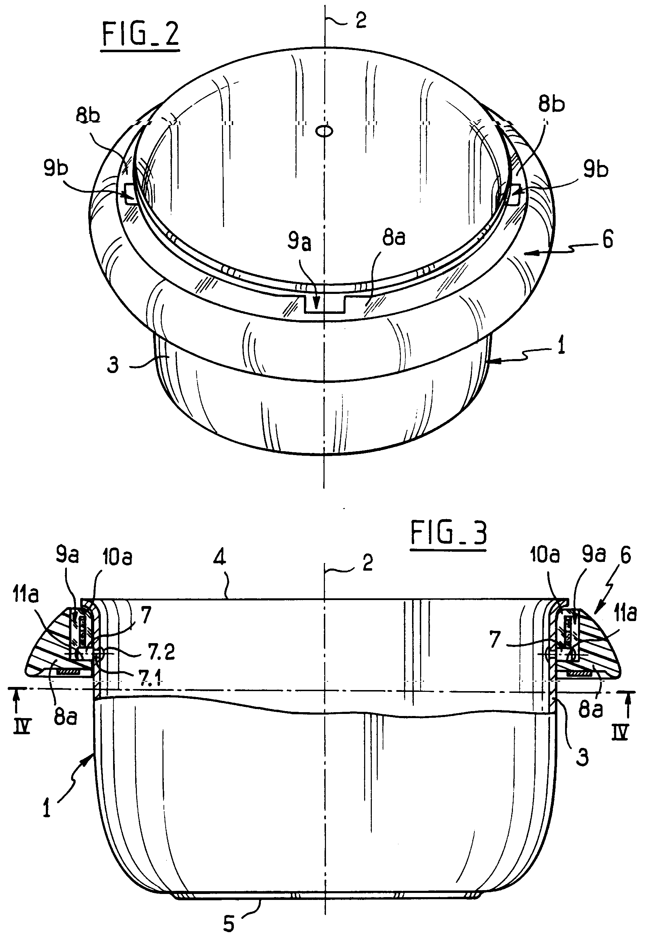

- la figure 2 est une vue en perspective analogue à la figure 1, l'anse annulaire étant montée sur le fût ;
- la figure 3 est une vue partiellement en coupe par un plan axial de l'ustensile de cuisson avec l'anse annulaire montée sur le fût ;

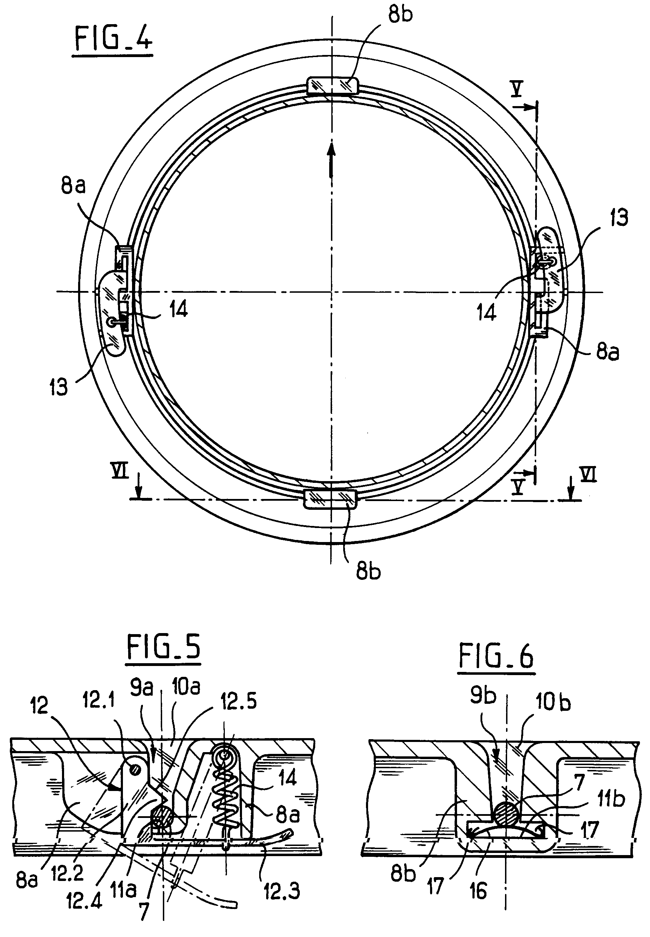

- la figure 4 est une vue en coupe selon la ligne IV-IV de la figure 3 ;
- la figure 5 est une vue en coupe partielle selon la ligue V-V de la figure 4, illustrant le détail de réalisation d'une encoche de l'anse annulaire, équipée d'un levier d'encliquetage :
- la figure 6 est une vue en coupe partielle selon la ligne VI-VI de la figure 4, illustrant le détail de réalisation d'une encoche de l'anse annulaire, équipée d'une lame élastique.

En référence aux figures, l'ustensile de cuisson comporte un fût de base 1 de révolution autour d'un axe 2 et possédant une paroi latérale 3 de forme sensiblement cylindrique, ouverte à son extrémité supérieure 4 et obturée à son extrémité inférieure par un fond 5. Une anse annulaire 6 est fixée de façon amovible sur la périphérie de la paroi latérale 3 du fût 1, à proximité du bord périphérique de l'extrémité supérieure 4 de la paroi 3. Cette anse 6 est réalisée en matériau isolant tel que de la bakélite qui, outre ses vertus d'isolant thermique, présente de bonnes caractéristiques mécaniques.

Pour la fixation de l'anse annulaire 6 sur le fût 1, la paroi latérale 3 de ce fût est équipée de quatre pions de fixation 7 disposés à 90° sur la périphérie de la paroi 3 et s'étendant sensiblement radialement, en saillie de la surface d'extérieure de la paroi 3. Les pions 7 sont ici fixés sur la paroi latérale 3 par sertissage. Chaque pion 7 possède ainsi une portion arrière 7.1 de diamètre réduit, dont l'extrémité libre 7.2 est aplatie contre la face intérieure de la paroi latérale 3.

L'anse annulaire 6 est quant à elle pourvue de quatre bossages intérieurs disposés à 90°, dans lesquels sont ménagées des encoches verticales, c'est-à-dire sensiblement perpendiculaires au plan de l'anse annulaire 6, formant logements pour les pions de fixation 7 du fût 1. En l'espèce, l'anse annulaire 6 est moulée d'un seul bloc avec les bossages, mais il sera également possible de réaliser ces bossages sous forme d'inserts, rapportés par vissage, rivetage ou collage sur l'anse annulaire. On distingue ici deux bossages 8a diamétralement opposés, pourvus chacun d'une encoche verticale 9a et d'un organe de verrouillage d'un des pions de fixation 7 du fût 1 à l'intérieur de l'encoche 9a, et deux bossages 8b diamétralement opposés, pourvus chacun d'une encoche verticale 9b. Les quatre encoches 9a et 9b ont une extrémité supérieure débouchante 10a, 10b et possèdent, à leur extrémité inférieure un fond 11a, 11b formant butée pour les pions de fixation 7 du fût 1.

En l'espèce, l'organe de verrouillage du bossage 8a comporte un levier d'encliquetage 12 qui est monté par une branche 12.2 sur un axe 12.1 pour pivoter transversalement à l'encoche 9a, entre une position de verrouillage dans laquelle il forme une butée s'opposant au retrait d'un doigt 7 disposé dans le fond de l'encoche 9a et une position de déverrouillage dans laquelle il autorise le glissement du pion 7 en direction de l'ouverture 10a de l'encoche 9a. La manoeuvre du levier 12 est facilitée par une seconde branche 12.3 sensiblement perpendiculaire à la première branche 12.2, et qui s'étend à l'extérieur du bossage 8a. Cette seconde branche 12.3 est attelée à l'une des extrémités d'un ressort 14 dont l'autre extrémité est articulée au bossage 8a, de sorte que le ressort 14 assure le rappel élastique du levier 12 dans sa position de verrouillage. En outre, la branche 12.2 du levier 12 présente un ergot ou dent de verrouillage 12.4 qui possède une face supérieure 12.5 sensiblement inclinée vers le fond de l'encoche, formant une rampe pour le pion 7 lors de son insertion à l'intérieur de l'encoche 9 en direction du fond 11 de cette encoche. Le levier 12 est ainsi automatiquement amené dans sa position de déverrouillage par le pion 7 lors du passage de ce pion, avant d'être rappelé par le ressort 14 dans sa position de verrouillage après que ce pion a franchi l'extrémité inférieure de la rampe 12.5. En outre, les encoches 9a, 9b sont ici de forme évasée en direction de leur extrémité supérieure ouverte 10a, 10b, ce qui facilite l'introduction des pions de fixation 7 à l'intérieur des encoches 9a, 9b.

Les deux autres bossages 8b ne sont pas équipés d'organe de verrouillage des pions 7, mais le fond 11b des encoches 9b de ces bossages est équipé d'une lame galbée 16 dont les extrémités sont en appui sur le fond 11b. Cette lame forme ainsi un tampon élastique qui permet de rattraper un éventuel jeu de montage de l'anse annulaire 6 sur les pions de fixation 7 du fût 1. La lame 16 est ici logée dans des échancrures 17 ménagées dans le fond du bossage 8b de part et d'autre de l'encoche 9b.

Pour monter l'anse annulaire 6 sur le fût 1, on engage l'anse 6 autour du fût 1 par le bas, de sorte que cette anse entoure la paroi latérale 3 du fût 1. On fait tourner l'anse 6 autour de l'axe 2 pour que les bossages 8a, 8b viennent en regard des pions de fixation 7 et l'on engage ces pions à l'intérieur des encoches 9a, 9b correspondantes. On notera à ce propos que la pénétration des pions 7 à l'intérieur des encoches 9 est facilitée par la forme évasée de ces encoches. Lorsque les deux pions 7 qui sont engagés dans les encoches 9a arrivent au contact des ergots 12.4 des leviers d'encliquetage 12, ils glissent sur la rampe 12.5 de ces ergots et forcent ces derniers à pivoter à l'encontre du ressort 14 vers leur position de déverrouillage. Lorsque les pions 7 franchissent l'extrémité inférieure de la rampe 12.5 et parviennent en butée contre le fond 11a de l'encoche 9a, le levier 12 est automatiquement rappelé vers sa position de verrouillage par le ressort 14. L'anse annulaire 6 est alors solidaire du fût 1, les leviers 12 des bossages 8a s'opposant à un retrait axial de l'anse 6 en direction du fond 5 du fût 1, tandis que les fonds 11a, 11b des bossages 8a, 8b forment des butées s'opposant au retrait axial de l'anse 6 par le bord périphérique de l'ouverture supérieure 4 du fût 1.

Lorsque l'on souhaite démonter l'anse annulaire 6, on agit sur les branches de manoeuvre 12.3 des leviers 12 pour faire pivoter ces derniers vers leur position de déverrouillage. Les pions de fixation 7 du fût 1 peuvent alors coulisser à l'intérieur des encoches 9a en direction de l'ouverture supérieure 10a, pour un déplacement axial de l'anse annulaire 6 en direction du fond 5 du fût 1 jusqu'au dégagement complet de l'anse 6.

L'invention n'est pas limitée au mode de réalisation qui vient d'être décrit mais englobe au contraire toute variante reprenant, avec des moyens équivalents, les caractéristiques essentielles énoncées ci-dessus.

Dans l'exemple illustré, on a prévu un montage de l'anse annulaire par le bas du fût, ce qui d'une part facilite l'engagement de l'anse autour du fût dont le fond est plus étroit que le bord périphérique supérieur et d'autre part permet d'assurer une reprise des efforts par le fond des encoches verticales de l'anse lors du soulèvement de l'ustensile de cuisson. Mais il est également possible de prévoir un montage de l'anse annulaire par le haut, les encoches verticales ayant alors une extrémité inférieure débouchante et une extrémité supérieure obturée par un fond. Dans ce cas, ce sont les leviers d'encliquetage qui assurent la reprise des efforts lors du soulèvement de l'ustensile.

## Revendications

1. Ustensile de cuisson, comportant un fût de base (1) de révolution autour d'un axe (2) et une anse annulaire (6) montée sur la périphérie dudit fût, ladite anse annulaire (6) étant fixée de façon amovible sur le fût (1).

2. Ustensile selon la revendication 1, caractérisé en ce que le fût (1) est pourvu d'au moins trois pions de fixation (7) s'étendant sensiblement radialement, en saillie de la surface extérieure du fût (1), pour coopérer avec des logements correspondants (9a, 9b) ménagés intérieurement dans l'anse annulaire (6), au moins deux (9a) de ces logements étant associés chacun à un organe de verrouillage (12) monté sur l'anse annulaire (6) pour être mobile entre une position de verrouillage dans laquelle il s'oppose au retrait du pion de fixation correspondant (7) et une position de déverrouillage dans laquelle il autorise ce retrait.

3. Ustensile selon la revendication 2, caractérisé en ce que les logements de l'anse annulaire (6) sont des encoches (9a, 9b) ménagées dans des bossages (8a, 8b) de l'anse annulaire (6) perpendiculairement au plan de cette anse, lesdites encoches ayant une extrémité supérieure débouchante (10a, 10b) et possédant à leur extrémité inférieure un fond (11a, 11b) formant butée pour les pions de fixation (7) du fût (1).

4. Ustensile selon la revendication 3, caractérisé en ce que chacun des organes de verrouillage associés à au moins deux des encoches (9a) de l'anse annulaire (6) comporte un levier d'encliquetage (12) monté sur l'anse annulaire (6) pour pivoter transversalement à l'encoche associée (9a) entre sa position de verrouillage et sa position de déverrouillage.

5. Ustensile selon la revendication 4, caractérisé en ce que le levier d'encliquetage (12) est équipé d'une branche de manoeuvre (12.3) attelée à une extrémité d'un ressort (14) qui est attelé par son autre extrémité à l'anse annulaire (6) pour assurer le rappel du levier d'encliquetage (12) vers sa position de verrouillage.

6. Ustensile selon l'une des revendications 3 à 5, caractérisé en ce que le fond (11b) d'au moins l'une (9b) des encoches de l'anse annulaire (6) est équipé d'un tampon élastique (16) assurant le rattrapage du jeu de montage de l'anse annulaire (6) lorsque les pions de fixation (7) sont disposés dans les encoches (9a, 9b) et que les organes de verrouillage (12) sont en position de verrouillage.

7. Ustensile selon la revendication 6, caractérisé en ce que le tampon élastique précité est constitué par une lame galbée (16) dont les extrémités sont en appui sur le fond (11b) de l'encoche (9b).

8. Ustensile selon l'une des revendications 3 à 7, caractérisé en ce que les encoches (9a, 9b) de l'anse annulaire (6) sont de forme évasée en direction de leur extrémité supérieure ouverte (10a, 10b).

9. Ustensile selon l'une des revendications 2 à 8, caractérisé en ce que le fût (1) présente quatre pions de fixation (7) disposés à 90°, et l'anse annulaire (6) comporte quatre logements (9a, 9b) disposés à 90°, dont deux logements (9a) diamétralement opposés, qui sont chacun associés à un organe de verrouillage (12) et deux autres logements (9b) diamétralement opposés, qui sont exempts d'organe de verrouillage.

## Claims

1. A cooking utensil comprising a pot (1) that is circularly symmetrical about an axis (2), and an annular handle (6) assembled to the periphery of said pot, said annular handle (6) being fixed to the pot (1) in removable manner.

2. A utensil according to claim 1, characterized in that the pot (1) is provided with at least three fixing pins (7) projecting substantially radially from the outside surface of the pot (1) to cooperate with corresponding housings (9a, 9b) formed on the inside of the annular handle (6), at least two (9a) of said housings being associated with respective locking members (12) mounted on the annular handle (6) to move between locking positions in which they prevent the corresponding fixing pins (7) from withdrawing and unlocking positions in which they allow the pins to withdraw.

3. A utensil according to claim 2, characterized in that the housings of the annular handle (6) are notches (9a, 9b) formed in extensions (8a, 8b) of the annular handle (6), said notches being perpendicular to the plane of said handle, having respective open top ends (10a, 10b), and possessing respective bases (11a, 11b) at their bottom ends forming abutments for the fixing pins (7) of the pot (1).

4. A utensil according to claim 3, characterized in that each of the locking members associated with a respective one of at least two of the notches (9a) of the annular handle (6) includes a locking lever (12) mounted on the annular handle (6) to pivot transversely to the associated notch (9a) between its locking position and its unlocking position.

5. A utensil according to claim 4, characterized in that the locking lever (12) is fitted with a maneuvering arm (12.3) coupled to one end of a spring (14) which is coupled at its other end to the annular handle (6) to ensure that the locking lever (12) returns to its locking position.

6. A utensil according to any one of claims 3 to 5, characterized in that the base (11b) of at least one (9b) of the notches of the annular handle (6) is fitted with a resilient pad (16) ensuring that the assembly clearance of the annular handle (6) is taken up when the fixing pins (7) are disposed in the notches (9a, 9b) and the locking members (12) are in the locking position.

7. A utensil according to claim 6, characterized in that the above-mentioned resilient pad is constituted by an arched blade (16) having ends which bear on the base (11b) of the notch (9b).

8. A utensil according to any one of claims 3 to 7, characterized in that the notches (9a, 9b) of the annular handle (6) are flared in shape towards their open top ends (10a, 10b).

9. A utensil according to any one of claims 2 to 8, characterized in that the pot (1) presents four fixing pins (7) disposed at 90°, and the annular handle (6) includes four housings (9a, 9b) disposed at 90°, having two diametrically-opposite housings (9a) associated with respective locking members (12), and two other diametrically-opposite housings (9b) which do not have locking members.

## Patentansprüche

1. Kochgerät mit einem Kessel (1) in Form eines Drehkörpers mit einer Achse (2) und mit einem ringförmigen Griff (6), der an dem Umfang dieses Kessels angeordnet ist, wobei der ringförmige Griff (6) abnehmbar an dem Kessel (1) befestigt ist.

2. Gerät nach Anspruch 1, dadurch **gekennzeichnet**, daß der Kessel (1) mit mindestens drei Befestigungszapfen (7) versehen ist, die sich im wesentlichen radial erstrecken und von der Außenfläche des Kessels (1) vorstehen, um mit entsprechenden Aufnahmen (9a, 9b) zusammenzuwirken, die innen im ringförmigen Griff (6) ausgebildet sind, wobei mindestens zwei (9a) dieser Aufnahmen jeweils mit einem Verriegelungselement (12) verbunden sind, das auf dem ringförmigen Griff (6) so angeordnet ist, daß es zwischen einer Verriegelungsstellung, in der es sich dem Zurückziehen des entsprechenden Befestigungszapfens (7) widersetzt, und einer Entriegelungsstellung, in der es dieses Zurückziehen zuläßt, beweglich ist.

3. Gerät nach Anspruch 2, dadurch **gekennzeichnet**, daß die Aufnahmen des ringförmigen Griffes (6) Einkerbungen (9a, 9b) sind, die in Vorsprüngen (8a, 8b) des ringförmigen Griffes (6) senkrecht zur Ebene dieses Griffes ausgebildet sind, wobei die Einkerbungen ein offenes oberes Ende (10a, 10b) haben und an ihrem unteren Ende einen Boden (11a, 11b) besitzen, der einen Anschlag für die Befestigungszapfen (7) des Kessels (1) bildet.

4. Gerät nach Anspruch 3, dadurch **gekennzeichnet**, daß jedes der Verriegelungselemente, die mit mindestens zwei Einkerbungen (9a) des ringförmigen Griffes (6) verbunden sind, einen Sperrhebel (12) hat, der auf dem ringförmigen Griff (6) für eine Schwenkbewegung quer zur damit verbundenen Einkerbung (9a) zwischen seiner Verriegelungsstellung und seiner Entriegelungsstellung angeordnet ist.

5. Gerät nach Anspruch 4, dadurch **gekennzeichnet**, daß der Sperrhebel (12) mit einem Betätigungsarm (12.3) versehen ist, der an einem Ende einer Feder (14) angehängt ist, die über ihr anderes Ende an dem ringförmigen Griff (6) angehängt ist, um das Rückstellen des Sperrhebels (12) in Richtung seiner Verriegelungsstellung zu gewährleisten.

6. Gerät nach einem der Ansprüche 3 bis 5, dadurch **gekennzeichnet**, daß der Boden (11b) mindestens einer (9b) der Einkerbungen des ringförmigen Griffes (6) mit einem elastischen Puffer (16) versehen ist, der das nachträgliche Ändern des Spiels der Montage des ringförmigen Griffes (6) gewährleistet, wenn die Befestigungszapfen (7) in den Einkerbungen (9a, 9b) angeordnet sind und die Verriegelungselemente (12) in Verriegelungsstellung sind.

7. Gerät nach Anspruch 6, dadurch **gekennzeichnet**, daß der vorher erwähnte elastische Puffer von einer geschwungenen Lamelle (16) gebildet ist, deren Enden auf dem Boden (11b) der Einkerbung (9b) anliegen.

8. Gerät nach einem der Ansprüche 3 bis 7, dadurch **gekennzeichnet**, daß die Einkerbungen (9a, 9b) des ringförmigen Griffes (6) eine nach oben in Richtung ihres offenen oberen Endes (10a, 10b) breiter werdende Form haben.

9. Gerät nach einem der Ansprüche 2 bis 8, dadurch **gekennzeichnet**, daß der Kessel (1) vier Befestigungszapfen (7) hat, die in einem Winkel von 90° zueinander angeordnet sind, und der ringförmige Griff (6) vier Aufnahmen (9a, 9b) hat, die in einem Winkel von 90° zueinander angeordnet sind, wobei zwei diametral gegenüberliegende Aufnahmen (9a) jeweils mit einem Verriegelungselement (12) verbunden sind und zwei andere diametral gegenüberliegende Aufnahmen (9b) ohne Verriegelungselement sind.
